# EUROPÄISCHE PATENTSCHRIFT

(11) **EP 2 132 264 B1**
(45) Veröffentlichungstag und Bekanntmachung des Hinweises auf die Patenterteilung: **27.04.2011**
(21) Anmeldenummer: 08715805.1
(22) Anmeldetag: 16.02.2008
(51) Int. Cl.: C08L 33/00

(54) **BINDEMITTELKOMBINATIONEN AUF BASIS POLYACRYLATDISPERSIONEN**
BINDING AGENT COMBINATIONS BASED ON POLYACRYLATE DISPERSIONS
COMBINAISONS DE LIANTS À BASE DE DISPERSIONS DE POLYACRYLATE

(30) Priorität: 02.03.2007 DE 102007010660
(43) Veröffentlichungstag der Anmeldung: 16.12.2009
(73) Patentinhaber: Bayer MaterialScience AG, 51368 Leverkusen (DE)
(72) Erfinder: MÜNZMAY, Alice, 41539 Dormagen (DE); HACKBARTH, Sandra, 50181 Bedburg (DE); MELCHIORS, Martin, 42799 Leichlingen (DE); GEWISS, Heinz-Dietmar, 40668 Meerbusch (DE)
(86) Internationale Anmeldenummer: PCT/EP2008/001204
(87) Internationale Veröffentlichungsnummer: WO 2008/107069

(56) Entgegenhaltungen:
- EP-A- 1 229 057
- US-A- 4 443 576

## Beschreibung

Die Erfindung betrifft wässrige Polyacrylatdispersionen enthaltend hydrophobe Cosolventien, ein Verfahren zu deren Herstellung und Verwendung als Bindemittel zur Herstellung von blasenfreien Beschichtungen.

Aus einer Vielzahl von Veröffentlichungen und Patenten ist bekannt, Dispersionen auf Basis von Polyacrylatdispersionen in wasserverdünnbaren Lacken und Beschichtungssystemen einzusetzen.

In der EP-A 947 557 wird die Verwendung von "speziellen Lösemittelgemischen" bestehend aus einem hydrophoben, nicht wassermischbaren, unverseifbaren Lösemittel und einem wassermischbaren bzw. wasserlöslichen, unverseifbaren Lösemittels als Cosolvenz bei der Acrylatpolymerisation beschrieben.

Beim Auftrag beliebiger Lacke auf ein Substrat wird Luft in gelöster Form oder als Mikrobläschen im Lackfilm eingeschlossen. Während der Lack trocknet und Lösemittel und/oder Wasser entweicht, entstehen Bläschen oder wachsen die vorhandenen Mikrobläschen. Ein Teil dieser Bläschen löst sich wieder im Lackpolymer, ein anderer Teil steigt zur Lackoberfläche und entweicht (rise & rupture model). Bei einer bestimmten Filmstärke kann ein Teil der Bläschen nicht mehr vollständig entweichen und es entstehen sichtbare Lackfilmdefekte wie Bläschen (blisters), Nadelstiche (pin holes) und Krater (craters). Die Filmstärke bei der dieses Phänomen auftritt, bezeichnet man als Blasenfreie Schichtstärke oder Kochergrenze. Die blasenfreie Schichtstärke ist ein wesentliches Qualitätsmerkmal für die Verarbeitungssicherheit eines Lackes.

Die blasenfreie Schichtstärke von wässrigen Zweikomponenten(2K)-Polyurethan(PUR)-Lacken gemäß dem Stand der Technik beträgt 60 bis 80 µm (siehe W. Hovestadt & E. Jürgens (1999) - Blasenfreie Applikation wässriger 2K-PUR-Lacke. In: Farbe & Lack 8/99: 30-37 und WO-A 2002/079296). Insbesondere beim Lackieren dreidimensionaler Teile entstehen aber durch Fließeffekte immer Bereiche, in denen höhere Lack-Schichtstärken als die genannten 60 bis 80 µm auftreten. Bei Verwendung von wässrigen 2K-PUR-Lacken gemäß dem Stand der Technik können dann Bläschen im Lack auftreten, die zu empfindlichen Störungen der Lackoberfläche und damit zur Wertminderung der lackierten Teile führen.

Von daher bestand ein dringender Bedarf nach wässrigen Dispersionen, die sich zu 2K-PUR-Lacken mit einer höheren blasenfreien Schichtstärke verarbeiten lassen. Grundlage dieser Lacke sollten Dispersionen sein, die aufgrund reaktiver Gruppen in der Lage sind, bereits bei Raumtemperatur mit geeigneten Vemetzem zu hochwertigen Beschichtungen auszuhärten. Darüber hinaus sollten die Dispersionen einen hohen Festkörpergehalt, eine ausgezeichnete Lagerstabilität, und zwar sowohl als Dispersion als auch im Lack aufweisen. Die Lackfilme sollten zudem sehr gute Beständigkeitseigenschaften gegen Lösemittel, Wasser und Umwelteinflüsse aufweisen.

Aufgabe der vorliegenden Erfindung bestand somit in der Bereitstellung von wässrigen Polymerdispersionen, die sich zu wässrigen 2K-PUR-Lacken mit höherer blasenfreier Schichtstärke verarbeiten lassen und die oben geforderten Eigenschaften erfüllen.

Überraschend wurde nun gefunden, dass Polyacrylatpolyol-Dispersionen, die spezielle, hydrophobe Kohlenwasserstoffe als Cosolvenzien enthalten, hervorragend zur Herstellung wässriger 2K-PUR-Lacke mit deutlich höherer blasenfreier Schichtstärke geeignet sind.

Dies war nicht zu erwarten, da z.B. in der DE-A-3 022 824, in der wasserverdünnbare Copolymerisate beschrieben werden, festgestellt wird, dass nicht wassermischbare Lösemittel die Wasserverdünnbarkeit der Bindemittel beeinträchtigen, so dass ein Zusatz solcher Lösemittel wenig empfehlenswert sei. Dieses Vorurteil wird auch dadurch untermauert, dass im oben zitierten Stand der Technik die beschriebenen Lösemittel in keinem Ausführungsbeispiel eingesetzt werden.

Gegenstand der vorliegenden Erfindung sind daher wässrige Polyacrylatdispersionen enthaltend Copolymerisate P), die aufgebaut sind aus
I) einem hydroxyfunktionellen, hydrophoben Polymerisat, enthaltend als Aufbaumonomere
   Ia) (Meth)-acrylsäureester mit C₁- bis C₁₈-Kohlenwasserstoffresten im Alkoholteil und/oder Vinylaromaten und/oder Vinylester und
   Ib) hydroxyfunktionelle Monomere sowie
II) einem hydroxyfunktionellen, hydrophilen Polymerisat, enthaltend als Aufbaukomponenten
   IIa) (Meth)-acrylsäureester mit C₁- bis C₁₈-Kohlenwasserstoffresten im Alkoholteil und/oder Vinylaromaten und/oder Vinylester,
   IIb) hydroxyfunktionelle Monomere und
   IIc) säurefunktionelle Monomere, und als Lösungsmittel C) ausschließlich Cosolventien, bestehend aus mindestens einem hydrophoben, nicht wassermischbaren Kohlenwasserstoff, welcher einen Siedebeginn (nach ASTM D86-05) von 170°C bis 250°C, bevorzugt von 180°C bis 230°C und einen Trockenpunkt (nach ASTM D86-05) von 200°C bis 280°C, bevorzugt von 200°C bis 260°C aufweist.

Gegebenenfalls kann das Copolymerisat P) noch als weitere Polymerisationsstufe ein hydroxyfunktionelles, hydrophobes Copolymerisat II') auf Basis von hydroxy- und/oder nichtfunktionellen (Meth)-acrylsäureester bzw. Vinylaromaten als Aufbaukomponente enthalten. Dies wird im Anschluss an die Herstellung des Copolymerisats II) in situ durch Copolymerisation der Monomere durchgeführt.

Geeignete Monomere Ia)/IIa) sind z.B. Ethylacrylat, n-Butylacrylat, iso-Butylacrylat, tert-Butylacrylat, 2-Ethylhexylacrylat, Methylmethacrylat, n-Butylmethacrylat, Styrol, Vinyltoluol, Ethylmethacrylat, 2-Ethylhexyl-methacrylat, α-Methylstyrol bzw. Mischungen dieser und anderer Monomere. Bevorzugte (Meth)-acrylsäureester a) sind solche mit linear- oder verzweigtaliphatischen Kohlenwasserstoffresten mit 1 bis 18, besonders bevorzugt 1 bis 8 C-Atomen. Gegebenenfalls können Vinylester mit verwendet werden.

Geeignete Monomere Ia/IIa) sind weiterhin die Versterungsprodukte von Vinylalkohol mit linearen oder verzweigten, aliphatischen Carbonsäuren wie beispielsweise Vinylacetat, Vinylpropionat, Vinylbutyrat, Vinyl-2-ethylhexanoat, Vinyloctanoat, Vinyldecanoat, Vinyldodecanoat (Vinyllaurat) oder Vinylstearat. Bevorzugt sind die Vinylester verzweigter, aliphatischer Carbonsäuren der allgemeinen Formel (I), 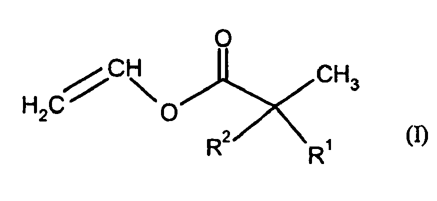 in welcher R¹ und R² gesättigte Alkylgruppen sind, enthaltend zusammen 6, 7 oder 8 C-Atome, entsprechend der Verbindungen VeoVa^{™} 9, 10 und 11.

Die genannten Monomere unterscheiden sich hinsichtlich der Glastemperatur ihrer Homopolymere:

| **Monomer** | **T_{G} [°C]** |
|---|---|
| VeoVa^{™} 9 | + 70 |
| VeoVa^{™} 10 | - 3 |
| VeoVa^{™} 11 | - 40 |

Optional können auch weitere zur radikalischen Copolymerisation befähigte Monomere als Verbindungen der Komponente Ia/IIa) bei der Herstellung von Copolymerisat I) eingesetzt werden. Dies können beispielsweise Derivate der Acryl- oder Methacrylsäure wie Acrylamid, Methacrylamid, Acrylnitril oder Methacrylnitril sein. Weiterhin möglich sind Vinylether oder Vinylacetate. Als weitere gegebenenfalls in untergeordneten Mengen einzusetzende Komponenten Ia/IIa) kommen di- oder höher-funktionelle (Meth)acrylatmonomere und/oder Vinylmonomere, wie z.B. Hexandioldi(meth)acrylat oder Divinylbenzol in Frage. Ebenfalls in Ia/IIa) können mit Alkylenoxiden modifizierte oder kettenverlängerte, polymerisierbare hydroxyfunktionelle Monomere mit einem zahlenmittleren Molekulargewicht ≤ 3 000 g/mol, bevorzugt ≤ 500 g/mol eingesetzt werden. Als Alkylenoxide kommen hierfür bevorzugt Ethylen-, Propylen oder Butylenoxid einzeln oder in Mischungen zum Einsatz.

Geeignete hydroxyfunktionelle Monomere Ib)/IIb) sind z.B. 2-Hydroxyethylmethacrylat, 2-Hydroxypropylmethacrylat, 2-Hydroxyethylacrylat, 2-Hydroxypropylacrylat, 4-Hydroxybutylacrylat, 4-Hydroxybutylmethacrylat. Bevorzugte Monomere b) sind 2-Hydroxyethylmethacrylat, 2-Hydroxypropylmethacrylat oder 4-Hydroxybutylacrylat sowie Mischungen dieser Verbindungen.

Geeignete olefinisch ungesättigte, säurefunktionelle Monomere IIc) sind sulfon- oder carbonsäurefunktionelle Monomere, bevorzugt carbonsäurefunktionelle Monomere wie Acrylsäure, Methacrylsäure, β-Carboxyethylacrylat, Crotonsäure, Fumarsäure, Maleinsäureanhydrid, Itaconsäure oder Monoalkylester zweibasiger Säuren bzw. Anhydride wie z.B. Maleinsäure-monoalkylester, bevorzugt sind Acryl- oder Methacrylsäure.

Ferner geeignet als Verbindungen der Komponente IIc) sind auch ungesättigte, radikalisch polymerisierbare Verbindungen mit Phosphat- bzw. Phosphonat- oder Sulfonsäure- bzw. Sulfonatgruppen, wie z.B. in der WO-A 00/39181 (S. 8, Z. 13 - S. 9, Z. 19) beschrieben werden. Bevorzugt ist 2-Acrylamido-2-methylpropansulfonsäure.

Der Anteil der Monomere Ia)/IIa) am Copolymerisat P) beträgt 23 bis 89,4 Gew.-%, bevorzugt 48 bis 85,3 Gew.-% und besonders bevorzugt 56,5 bis 81,5 Gew.-%, der Anteil der Monomere Ib)/IIb) am Copolymerisat P) beträgt 10 bis 65 Gew.-%, bevorzugt 13,5 bis 46,5 Gew.-% und besonders bevorzugt 17 bis 40 Gew.-% und der Anteil der Monomere IIc) am Copolymerisat P) beträgt 0,6 bis 12 Gew.-%, bevorzugt 1,2 bis 5,5 Gew.-% und besonders bevorzugt 1,5 bis 3,5 Gew.-%.

Die säurefunktionellen Monomere IIc) werden in solcher Menge eingesetzt, dass das Copolymerisat P) eine Säurezahl von 5 bis 55 mg KOH/g Feststoff, bevorzugt von 10 bis 35 mg KOH/g Feststoff und besonders bevorzugt von 12,5 bis 27,5 mg KOH/g Feststoff aufweist.

Der Anteil der hydroxyfunktionellen, hydrophoben Pfropfgrundlage I) am Copolymerisat P) beträgt 50 bis 95 Gew.-%, bevorzugt 75 bis 90 Gew.-%, der Anteil des hydroxyfunktionellen, hydrophilen Polymerisats II) am Copolymerisat P) beträgt 5 bis 50 Gew.-%, bevorzugt 10 bis 25 Gew.-%.

Die Vorgehensweise zur Polymerisation der ungesättigten Monomere ist dem Fachmann an sich vertraut. Typischerweise wird dazu in einem Reaktionsgefäß ein hydrophobes, nicht wassermischbares Kohlenwasserstoffgemisch C vorgelegt und die ungesättigten Monomere im Zulaufverfahren unter Einsatz eines Radikalinitiators polymerisiert.

In der bevorzugten Ausführungsform des Verfahren erfolgt eine zweistufige Zugabe und Polymerisation der Monomerengemische I) und II) in der genannten Reihenfolge. Dabei wird in einem ersten Schritt (i) aus den Monomeren Ia) und Ib) eine hydroxyfunktionelle, hydrophobe Pfropfgrundlage I) mit einer OH-Zahl von 12 bis 250 mg KOH/g Feststoff, bevorzugt von 50 bis 200 mg KOH/g Feststoff hergestellt. In einem anschließenden Schritt (ii) wird in der aus Schritt (i) erhaltenen Lösung der Pfropfgrundlage I) das hydroxyfunktionelle, hydrophile Polymerisat II) aus den Monomeren IIa) bis IIc) hergestellt, wobei dieses hydroxyfunktionelle, hydrophile Polymerisat eine OH-Zahl von 20 bis 250 mg KOH/g Feststoff, bevorzugt von 120 bis 220 mg KOH/g Feststoff und eine Säurezahl von 50 bis 250 mg KOH/g Feststoff, bevorzugt von 110 bis 200 mg KOH/g Feststoff aufweist.

Die Herstellung des Copolymerisats P) erfolgt durch eine radikalisch initiierte Copolymerisation der Monomermischung I) und II) in organischen Lösemittelgemischen C). Die Menge an organischen Lösemitteln C) wird so bemessen, dass die resultierenden Lösungen der Copolymerisate einen Festkörpergehalt von 95 bis 60 Gew.-%, bevorzugt 92,5 bis 80 Gew.-% haben.

Geeignete Cosolventien C) sind aliphatische oder aromatische Kohlenwasserstoffen, die einen Siedebeginn (nach ASTM D86-05) von 170°C bis 250°C, bevorzugt von 180°C bis 230°C, und einen Trockenpunkt (nach ASTM D86-05) von 200°C bis 280°C, bevorzugt von 200°C bis 260°C aufweisen.

**Tabelle 1: Cosolventien C)**

| Kohlenwasserstoff-Lösemittel C) | Typ | Siedebeginn (ASTM D86-05) [°C] | Trockenpunk t (ASTM D86-05) [°C] |
|---|---|---|---|
| Solvesso^{®} 200^{a)} | Aromatisch | 218 | 265 |
| Isopar^{®} K^{a)} | Aliphatisch | 178 | 197 |
| Isopar^{®} L^{a)} | Aliphatisch | 189 | 207 |
| Isopar^{®} M^{a)} | Aliphatisch | 223 | 254 |
| Soltrol^{®} 10^{b)} | Aliphatisch | 204 | 219 |
| Varsol^{®} 60^{a)} | Aromatisch | 195 | 245 |
| Varsol^{®} 80^{a)} | Aromatisch | 176 | 217 |

| | | | |
|---|---|---|---|
| a) Exxon-Chemie, Esso Deutschland GmbH b) Chevron Phillips Chem. Comp., USA | | | |

Bevorzugte Cosolventien C) sind Isopar^{®} L, Isopar^{®} M, Soltrol^{®} 10, Varsol^{®} 60, Varsol^{®} 80, besonders bevorzugt sind , Isopar^{®} L und Isopar^{®} M.

Im Anschluss an die Copolymerisation der Monomeren Ia) und Ib) zur Herstellung der Pfropfgrundlage I) wird das Polymersiat II) durch Copolymerisation der Monomeren IIa), IIb) und IIc) in Gegenwart der Pfropfgrundlage I) hergestellt. Es entsteht das in den erfindungsgemäßen Polyacrylatdispersionen enthaltende Copolymersiat P).

Zur Neutralisation der im Polymerisat II) einpolymerisierten Carboxylgruppen können organische Amine oder wasserlöslich, anorganische Basen eingesetzt werden. Bevorzugt sind N-Methylmorpholin, Triethylamin, Dimethylethanolamin, Dimethylisopropanolamin, Methyldiethanolamin, Triethanolamin und Ethyl-diisopropylamin. Ebenfalls geeignet sind Diethylethanolamin, Butanolamin, Morpholin, 2-Aminomethyl-2-methyl-propanol oder Isophorondiamin. Das Neutralisationsmittel wird in solchen Mengen zugesetzt, dass der Versalzungsgrad 70 bis 130 %, bevorzugt 90 bis 105 % der Carboxylgruppen beträgt, wobei besonders bevorzugt eine solche Menge Neutralisationsmittel zugesetzt wird, dass nach Überführung aller Carboxylgruppen in die Salzform noch freies Neutralisationsmittel vorhanden ist. Dies entspricht einem Neutralisationsgrad von >100 %. Es wurde gefunden, dass dadurch Dispersionsstabilität, Lackstabilität, Pigmentbenetzung und die filmoptischen Eigenschaften deutlich verbessert werden können.

Der pH-Wert der wässrigen Dispersion beträgt 6,0 bis 11,0, bevorzugt 7,9 bis 10,0, der Festkörpergehalt beträgt 35 bis 65 Gew.-%, bevorzugt 40 bis 55 Gew.-%.

Die erfindungsgemäßen wässrigen Polyacrylatdispersionen werden gegebenenfalls zusammen mit anderen Bindemitteln oder Dispersionen, z.B. auf Basis von Polyestern, Polyurethanen, Polyethern, Polyepoxiden oder Polyacrylaten, in Kombination mit Vernetzerharzen und gegebenenfalls Pigmenten und sonstigen in der Lackindustrie bekannten Hilfs- und Zusatzstoffen in oder als Lack bzw. Beschichtungsmittel eingesetzt.

Vor, während oder nach der Herstellung der wässrigen Bindemittelkombinationen durch Abmischung der Einzelkomponenten und auch im Fall der Herstellung von einkomponentig zu verarbeitenden Beschichtungsmitteln können die üblichen Hilfs- und Zusatzmittel der Lacktechnologie zugesetzt werden, wie z.B. Entschäumungsmittel, Verdickungsmittel, Pigmente, Dispergierhilfmittel, Katalysatoren, Hautverhinderungsmittel, Antiabsetzmittel oder Emulgatoren.

Beschichtungsmittel, enthaltend die erfindungsgemäßen wässrigen Polyacrylatdispersionen, sind ebenfalls Gegenstand der vorliegenden Erfindung.

Die Beschichtungsmittel, enthaltend die erfindungsgemäßen wässrigen Polyacrylatdispersionen, eignen sich für alle Einsatzgebiete, in denen wässrige Anstrich- und Beschichtungssysteme mit einem erhöhten Eigenschaftsprofil Verwendung finden, z.B. Beschichtung mineralischer Baustoff-Oberflächen, Lackierung und Versiegelung von Holz und Holzwerkstoffen, Beschichtung metallischer Oberflächen; Beschichtung und Lackierung asphalt- oder bitumenhaltiger Straßenbeläge, Lackierung und Versiegelung diverser Kunststoffoberflächen.

Bei den Lacken bzw. Beschichtungsmitteln auf Basis der erfindungsgemäßen wässrigen Polyacrylatdispersionen handelt es sich um Grundierungen, Füller, pigmentierte oder transparente Decklacke sowie Einschichtlacke, die in der Einzel- und Serienapplikation, z.B. im Bereich der Industrielackierung, Automobil-Erst- und -Reparaturlackierung, Anwendung finden können. Bevorzugte Verwendungen der erfindungsgemäßen in Wasser dispergiert und/oder gelöst vorliegenden Copolymerisate P) ist in Kombination mit Polyisocyanaten bzw. besonders bevorzugt in Kombination mit Mischungen von hydrophilen und hydrophoben Polyisocyanaten zur Beschichtung bzw. Lackierung metallischer Oberflächen oder Kunststoffen bei Raumtemperatur bis 180°C, oder in Kombination mit Aminoplastvernetzerharzen zur Beschichtung und Lackierung metallischer Oberflächen bei 110 bis 180°C in Form von Einschichtlacken oder als Decklacke.

Die Herstellung der Beschichtung kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die erfindungsgemäß herzustellenden und zu verwendenden Lacke und Beschichtungsmassen können jedoch auch nach anderen Methoden, beispielsweise durch Strich, Rollen oder Rakeln appliziert werden.

### Beispiele

### Vergleichsbeispiel 1 (= Beispiel 3 aus EP 947 557)

In einem 6 1-Reaktionsgefäß mit Rühr-, Kühl- und Heizvorrichtung wurden 186 g Butylglykol und 186 g Solvesso^{®} 100 (aromatischer KW, Exxon-Chemie, Esso Deutschland GmbH, Siedebeginn (ASTM D86-05) 162°C) vorgelegt und auf 145°C aufgeheizt. Bei dieser Temperatur wurde eine Mischung 1) aus 750 g Methylmethacrylat, 125 g Styrol, 445 g Hydroxyethylmethacrylat, 538 g Butylacrylat und 87 g Butylmethacrylat in 3 Stunden und unmittelbar anschließend eine Mischung 2) aus 128 g Methylmethacrylat, 180 g Hydroxyethylmethacrylat, 100 g Butylacrylat und 60 g Acrylsäure in 1,5 Stunden zudosiert. Parallel dazu wurde innerhalb von 5 Stunden eine Lösung von 88 g Di-tert.-butylperoxid in 70 g einer 1:1 Mischung von Butylglykol und Solvesso^{®} 100 zudosiert. Anschließend wurde 2 Stunden bei 145°C nachgerührt, dann auf 100°C abgekühlt und 76 g N,N-Dimethyethanolamin zugegeben. Nach 30 Minuten Homogenisieren wurde innerhalb von 2 Stunden bei 80°C mit 2700 g Wasser dispergiert. Es wurde eine Dispersion mit folgenden Daten erhalten:

| | |
|---|---|
| OH-Gehalt (Festkörper; theoretisch berechnet) | 3,3 % |
| Säurezahl (Festkörper) | 20 mg KOH/g |
| Festkörpergehalt | 43,8 % |
| Viskosität | 1400 mPas_{23°C} |
| pH-Wert (10 %ig in Wasser) | 8,1 |
| Neutralisationsgrad | 105 % |
| Mittlere Teilchengröße | 110 nm |
| Cosolvens: | 7,7 Gew.-% |

### Beispiel 2

In einem 6 1-Reaktionsgefäß mit Rühr-, Kühl- und Heizvorrichtung wurden 372 g Solvesso^{®} 200 vorgelegt und auf 145°C aufgeheizt. Bei dieser Temperatur wurde eine Mischung 1) aus 750 g Methylmethacrylat, 125 g Styrol, 445 g Hydroxyethylmethacrylat, 538 g Butylacrylat und 87 g Butylmethacrylat in 3 Stunden und unmittelbar anschließend eine Mischung 2) aus 128 g Methylmethacrylat, 180 g Hydroxyethylmethacrylat, 100 g Butylacrylat und 60 g Acrylsäure in 1,5 Stunden zudosiert. Parallel dazu wurde innerhalb von 5 Stunden eine Lösung von 88 g Di-tert.-butylperoxid in 70 g Solvesso^{®} 200 zudosiert. Anschließend wurde 2 Stunden bei 145°C nachgerührt, dann auf 100°C abgekühlt und 76 g N,N-Dimethyethanolamin zugegeben. Nach 30 Minuten Homogenisieren wurde innerhalb von 2 Stunden bei 80°C mit 2630 g Wasser dispergiert. Es wurde eine Dispersion mit folgenden Daten erhalten:

| | |
|---|---|
| OH-Gehalt (Festkörper; theoretisch berechnet) | 3,3 % |
| Säurezahl (Festkörper) | 20 mg KOH/g |
| Festkörpergehalt | 45,0 % |
| Viskosität | 1350 mPas_{23°C} |
| pH-Wert (10 %ig in Wasser) | 8,2 |
| Neutralisationsgrad | 105 % |
| Mittlere Teilchengröße | 110 nm |
| Cosolvens: | 7,7 Gew.-% |

### Beispiel 3

In einem 6 1-Reaktionsgefäß mit Rühr-, Kühl- und Heizvorrichtung wurden 372 g Isopar^{®} L vorgelegt und auf 145°C aufgeheizt. Bei dieser Temperatur wurde eine Mischung 1) aus 750 g Methylmethacrylat, 125 g Styrol, 445 g Hydroxyethylmethacrylat, 538 g Butylacrylat und 87 g Butylmethacrylat in 3 Stunden und unmittelbar anschließend eine Mischung 2) aus 128 g Methylmethacrylat, 180 g Hydroxyethylmethacrylat, 100 g Butylacrylat und 60 g Acrylsäure in 1,5 Stunden zudosiert. Parallel dazu wurde innerhalb von 5 Stunden eine Lösung von 88 g Di-tert.-butylperoxid in 70 g Isopar^{®} L zudosiert. Anschließend wurde 2 Stunden bei 145°C nachgerührt, dann auf 100°C abgekühlt und 76 g N,N-Dimethyethanolamin zugegeben. Nach 30 Minuten Homogenisieren wurde innerhalb von 2 Stunden bei 80°C mit 2700 g Wasser dispergiert. Es wurde eine Dispersion mit folgenden Daten erhalten:

| | |
|---|---|
| OH-Gehalt (Festkörper; theoretisch berechnet) | 3,3 % |
| Säurezahl (Festkörper) | 22 mg KOH/g |
| Festkörpergehalt | 43,7 % |
| Viskosität | 1090 mPas_{23°C} |
| pH-Wert (10 %ig in Wasser) | 8,3 |
| Neutralisationsgrad | 105 % |
| Mittlere Teilchengröße | 115 nm |
| Cosolvens: | 7,7 Gew.-% |

### Beispiel 4

In einem 6 1-Reaktionsgefäß mit Rühr-, Kühl- und Heizvorrichtung wurden 372 g Isopar^{®} M vorgelegt und auf 145°C aufgeheizt. Bei dieser Temperatur wurde eine Mischung 1) aus 750 g Methylmethacrylat, 125 g Styrol, 445 g Hydroxyethylmethacrylat, 538 g Butylacrylat und 87 g Butylmethacrylat in 3 Stunden und unmittelbar anschließend eine Mischung 2) aus 128 g Methylmethacrylat, 180 g Hydroxyethylmethacrylat, 100 g Butylacrylat und 60 g Acrylsäure in 1,5 Stunden zudosiert. Parallel dazu wurde innerhalb von 5 Stunden eine Lösung von 88 g Di-tert.-butylperoxid in 70 g Isopar^{®} M zudosiert. Anschließend wurde 2 Stunden bei 145°C nachgerührt, dann auf 100°C abgekühlt und 76 g N,N-Dimethyethanolamin zugegeben. Nach 30 Minuten Homogenisieren wurde innerhalb von 2 Stunden bei 80°C mit 2610 g Wasser dispergiert. Es wurde eine Dispersion mit folgenden Daten erhalten:

| | |
|---|---|
| OH-Gehalt (Festkörper; theoretisch berechnet) | 3,3 % |
| Säurezahl (Festkörper) | 19 mg KOH/g |
| Festkörpergehalt | 45,3 % |
| Viskosität | 1090 mPas_{23°C} |
| pH-Wert (10 %ig in Wasser) | 8,4 |
| Neutralisationsgrad | 105 % |
| Mittlere Teilchengröße | 105 nm |
| Cosolvens: | 7,7 Gew.-% |

### Beispiel 5

In einem 61-Reaktionsgefäß mit Rühr-, Kühl- und Heizvorrichtung wurden 372 g Varsol^{®} 60 vorgelegt und auf 145°C aufgeheizt. Bei dieser Temperatur wurde eine Mischung 1) aus 750 g Methylmethacrylat, 125 g Styrol, 445 g Hydroxyethylmethacrylat, 538 g Butylacrylat und 87 g Butylmethacrylat in 3 Stunden und unmittelbar anschließend eine Mischung 2) aus 128 g Methylmethacrylat, 180 g Hydroxyethylmethacrylat, 100 g Butylacrylat und 60 g Acrylsäure in 1,5 Stunden zudosiert. Parallel dazu wurde innerhalb von 5 Stunden eine Lösung von 88 g Di-tert.-butylperoxid in 70 g Soltrol^{®} 10 zudosiert. Anschließend wurde 2 Stunden bei 145°C nachgerührt, dann auf 100°C abgekühlt und 76 g N,N-Dimethyethanolamin zugegeben. Nach 30 Minuten Homogenisieren wurde innerhalb von 2 Stunden bei 80°C mit 2630 g Wasser dispergiert. Es wurde eine Dispersion mit folgenden Daten erhalten:

| | |
|---|---|
| OH-Gehalt (Festkörper; theoretisch berechnet) | 3,3 % |
| Säurezahl (Festkörper) | 19 mg KOH/g |
| Festkörpergehalt | 44,9 % |
| Viskosität | 1130 mPas_{23°C} |
| pH-Wert (10 %ig in Wasser) | 8,1 |
| Neutralisationsgrad | 105 % |
| Mittlere Teilchengröße | 110 nm |
| Cosolvens: | 7,7 Gew.-% |

### Vergleichsbeispiel 6

In einem 6 1-Reaktionsgefäß mit Rühr-, Kühl- und Heizvorrichtung wurden 372 g Isopar® V (aliphatischer KW, Exxon-Chemie, Esso Deutschland GmbH, Siedebeginn (ASTM D86-05) 273°Cvorgelegt und auf 145°C aufgeheizt. Bei dieser Temperatur wurde eine Mischung 1) aus 750 g Methylmethacrylat, 125 g Styrol, 445 g Hydroxyethylmethacrylat, 538 g Butylacrylat und 87 g Butylmethacrylat in 3 Stunden und unmittelbar anschließend eine Mischung 2) aus 128 g Methylmethacrylat, 180 g Hydroxyethylmethacrylat, 100 g Butylacrylat und 60 g Acrylsäure in 1,5 Stunden zudosiert. Parallel dazu wurde innerhalb von 5 Stunden eine Lösung von 88 g Di-tert.-butylperoxid in 70 g Isopar® V zudosiert. Anschließend wurde 2 Stunden bei 145°C nachgerührt, dann auf 100°C abgekühlt und 76 g N,N-Dimethyethanolamin zugegeben. Nach 30 Minuten Homogenisieren wurde innerhalb von 2 Stunden bei 80°C mit 2450 g Wasser dispergiert. Es wurde eine Dispersion mit folgenden Daten erhalten:

| | |
|---|---|
| OH-Gehalt (Festkörper; theoretisch berechnet) | 3,3 % |
| Säurezahl (Festkörper) | 19 mg KOH/g |
| Festkörpergehalt | 48,5 % |
| Viskosität | 1160 mPas_{23°C} |
| pH-Wert (10 %ig in Wasser) | 8,4 |
| Neutralisationsgrad | 105 % |
| Mittlere Teilchengröße | 110 nm |
| Cosolvens: | 7,7 Gew.-% |

### Anwendungsbeispiele: A bis F

Es wurden Klarlacke gemäß unten stehender Tabelle formuliert und mit dem Stufenrakel aufgetragen. Die Bestimmung der Blasengrenze erfolgte visuell nach 30 Minuten Ablüften

| Einsatzmengen in Gramm | A | B | C | D | E | F |
|---|---|---|---|---|---|---|
| Beispiel 1 | 514 | | | | | |
| Beispiel 2 | | 500 | | | | |
| Beispiel 3 | | | 515 | | | |
| Beispiel 4 | | | | 497 | | |
| Beispiel 5 | | | | | 500 | |
| Beispiel 6 | | | | | | 464 |
| Surfynol^{®} 104 BC | 11,3 | 11,3 | 11,3 | 11,3 | 11,3 | 11,3 |
| Borchigel^{®} PW25 | 1,5 | 1,5 | 1,5 | 1,5 | 1,5 | 1,5 |
| Baysilon^{®} VP AI 3468 | 9,4 | 9,4 | 9,4 | 9,4 | 9,4 | 9,4 |
| Bayhydur^{®} VP LS 2319 80%ig in ^{®}Butoxyl | 191,1 | 191,1 | 191,1 | 191,1 | 191,1 | 191,1 |
| Wasser | 31 | 45 | 30 | 48 | 45 | 91 |
| Blasengrenze [µm] | 60 | 80 | 90 | 130 | 100 | 65 |

## Patentansprüche

1. Wässrige Polyacrylatdispersionen enthaltend Copolymerisate P), die aufgebaut sind aus
I) einem hydroxyfunktionellen, hydrophoben Polymerisat, enthaltend als Aufbaumonomere
Ia) (Meth)-acrylsäureester mit C₁- bis C₁₈-Kohlenwasserstoffresten im Alkoholteil und/oder Vinylaromaten und/oder Vinylester und
Ib) hydroxyfunktionelle Monomere sowie
II) einem hydroxyfunktionellen, hydrophilen Polymerisat, enthaltend als Aufbaukomponenten
IIa) (Meth)-acrylsäureester mit C₁- bis C₁₈-Kohlenwasserstoffresten im Alkoholteil und/oder Vinylaromaten und/oder Vinylester,
IIb) hydroxyfunktionelle Monomere und
IIc) säurefunktionelle Monomere,
und als Lösungsmittel C) ausschließlich Cosolventien, bestehend aus mindestens einem hydrophoben, nicht wassermischbaren Kohlenwasserstoff, welcher einen Siedebeginn (nach ASTM D86-05) von 170°C bis 250°C und einen Trockenpunkt (nach ASTM D86- 05) von 200°C bis 280°C aufweist.

2. Wässrige Polyacrylatdispersionen gemäß Anspruch 1, **dadurch gekennzeichnet, dass** der wassermischbaren Kohlenwasserstoff einen Siedebeginn (nach ASTM D86-05) von 180°C bis 230°C ASTM D86-05) und einen Trockenpunkt (nach ASTM D86-05) von 200°C bis 260°C aufweist.

3. Wässrige Polyacrylatdispersionen gemäß Anspruch 1, **dadurch gekennzeichnet, dass** der Anteil der Monomere Ia)/IIa) am Copolymerisat P) 23 bis 89,4 Gew.-% und der Anteil der Monomere Ib)/IIb) am Copolymerisat P) 10 bis 65 Gew.-% und der Anteil der Monomere IIc) am Copolymerisat P) 0,6 bis 12 Gew.% beträgt.

4. Wässrige Polyacrylatdispersionen gemäß Anspruch 1, **dadurch gekennzeichnet, dass** die säurefunktionellen Monomere IIc) in solcher Menge eingesetzt werden, dass das Copolymerisat P) eine Säurezahl von 5 bis 55 mg KOH/g Feststoff aufweist.

5. Wässrige Polyacrylatdispersionen gemäß Anspruch 1, **dadurch gekennzeichnet, dass** der Anteil der hydroxyfunktionellen, hydrophoben Pfropfgrundlage I) am Copolymerisat P) 50 bis 95 Gew.-%, der Anteil des hydroxyfunktionellen, hydrophilen Copolymerisats II) am Pfropfcopolymerisat P) 5 bis 50 Gew.-% beträgt.

6. Verfahren zur Herstellung der wässrigen Polyacrylatdispersionen gemäß Anspruch 1, **dadurch gekennzeichnet, dass** in einem ersten Schritt (i) aus den Monomeren Ia) und Ib) eine hydroxyfunktionelle, hydrophobe Pfropfgrundlage I) mit einer OH-Zahl von 12 bis 250 mg KOH/g Feststoff hergestellt wird, in einem zweiten Schritt (ii) in der aus Schritt (i) erhaltenen Lösung der Pfropfgrundlage I) das hydroxyfunktionelle, hydrophile Polymerisat II) aus den Monomeren IIa) bis IIc) hergestellt wird, wobei dieses hydroxyfunktionelle, hydrophile Polymerisat eine OH-Zahl von 20 bis 250 mg KOH/g Feststoff und eine Säurezahl von 50 bis 250 mg KOH/g Feststoff aufweist und die radikalisch initiierte Copolymerisation der Monomermischung I) und II) in Cosolventien C) erfolgt und anschließend das Neutralisationsmittel zur Erzeugung der für die Dispergierung notwendigen ionischen Gruppen nach dieser Copolymer-Herstellung zugegeben wird, gefolgt vom Dispergierschritt durch Zugabe von Wasser zum Copolymer P) bzw. Überführen des Copolymeren P) in eine wässrige Vorlage.

7. Wässrige Beschichtungsmittel, enthaltend Polyacrylatdispersionen gemäß Anspruch 1.

8. Verwendung der Polyacrylatdispersionen gemäß Anspruch 1 zur Herstellung von Grundierungen, Füllern, pigmentierten oder transparenten Decklacken sowie Einschichtlacke,n Automobil-Erst- und -Reparaturlacken.

## Claims

1. Aqueous polyacrylate dispersions comprising copolymers P) synthesized from
I) a hydroxyl-functional, hydrophobic polymer comprising as structural monomers
Ia) (meth)acrylic esters having C₁ to C₁₈ hydrocarbon radicals in the alcohol moiety and/or vinylaromatics and/or vinyl esters, and
Ib) hydroxy-functional monomers, and also
II) a hydroxy-functional, hydrophilic polymer comprising as structural components
IIa) (meth)acrylic esters having C₁ to C₁₈ hydrocarbon radicals in the alcohol moiety and/or vinylaromatics and/or vinyl esters,
IIb) hydroxy-functional monomers, and
IIc) acid-functional monomers,
and, as solvents C), exclusively cosolvents composed of at least one hydrophobic, water-immiscible hydrocarbon which has an initial boiling point (to ASTM D86-05) of 170°C to 250°C and a drying point (to ASTM D86-05) of 200°C to 280°C.

2. Aqueous polyacrylate dispersions according to Claim 1, **characterized in that** the water-miscible hydrocarbon has an initial boiling point (to ASTM D86-05) of 180°C to 230°C and a drying point (to ASTM D86-05) of 200°C to 260°C.

3. Aqueous polyacrylate dispersions according to Claim 1, **characterized in that** the fraction of the monomers Ia) /ITa) as a proportion of the copolymer P) is 23% to 89.4% by weight and the fraction of the monomers Ib)/IIb) as a proportion of the copolymer P) is 10% to 65% by weight, and the fraction of the monomers IIc) as a proportion of the copolymer P) is 0.6% to 12% by weight.

4. Aqueous polyacrylate dispersions according to Claim 1, **characterized in that** the acid-functional monomers IIc) are used in an amount such that the copolymer P) has an acid number of 5 to 55 mg KOH/g solid.

5. Aqueous polyacrylate dispersions according to Claim 1, **characterized in that** the fraction of the hydroxy-functional, hydrophobic graft base I) as a proportion of the copolymer P) is 50% to 95% by weight and the fraction of the hydroxy-functional, hydrophilic copolymer II) as a proportion of the graft copolymer P) is 5% to 50% by weight.

6. Process for preparing the aqueous polyacrylate dispersions according to Claim 1, **characterized in that** in a first step (i) the monomers Ia) and Ib) are used to prepare a hydroxy-functional, hydrophobic graft base I) having an OH number of 12 to 250 mg KOH/g solid, in a second step (ii) the hydroxy-functional, hydrophilic polymer II) is prepared from the monomers IIa) to IIc) in the solution of the graft base I) obtained from step (i), this hydroxy-functional, hydrophilic polymer having an OH number of 20 to 250 mg KOH/g solid and an acid number of 50 to 250 mg KOH/g solid, and the free-radically initiated copolymerization of the monomer mixture I) and II) takes place in cosolvents C), and subsequently the neutralizing agent for generating the ionic groups that are necessary for dispersing is added after this copolymer preparation, followed by the dispersing step by addition of water to the copolymer P) and/or transfer of the copolymer P) to an aqueous initial charge.

7. Aqueous coating compositions comprising polyacrylate dispersions according to Claim 1.

8. Use of the polyacrylate dispersions according to Claim 1 to produce primers, surfacers, pigmented or transparent topcoat materials, and also single-coat paints and automotive OEM and refinish materials.

## Revendications

1. Dispersions aqueuses de polyacrylate contenant des copolymères P), qui sont formés à partir de
I) un polymère hydrophobe à fonction hydroxy, contenant en tant que monomères constitutifs
Ia) des esters de l'acide (méth)acrylique contenant des radicaux hydrocarbonés en C₁ à C₁₈ dans la partie alcool et/ou des composés aromatiques de vinyle et/ou des esters de vinyle et
Ib) des monomères à fonction hydroxy, ainsi que
II) un polymère hydrophile à fonction hydroxy, contenant en tant que composants constitutifs
IIa) des esters de l'acide (méth)acrylique contenant des radicaux hydrocarbonés en C₁ à C₁₈ dans la partie alcool et/ou des composés aromatiques de vinyle et/ou des esters de vinyle,
IIb) des monomères à fonction hydroxy et
IIc) des monomères à fonction acide,
et en tant que solvant C) exclusivement des co-solvants constitués d'au moins un hydrocarbure hydrophobe, non miscible avec l'eau, qui présente un point d'ébullition initial (selon ASTM D86-05) de 170 °C à 250 °C et un point sec (selon ASTM D86-05) de 200 °C à 280 °C.

2. Dispersions aqueuses de polyacrylate selon la revendication 1, **caractérisées en ce que** l'hydrocarbure miscible avec l'eau présente un point d'ébullition initial (selon ASTM D86-05) de 180 °C à 230 °C et un point sec (selon ASTM D86-05) de 200 °C à 260 °C.

3. Dispersions aqueuses de polyacrylate selon la revendication 1, **caractérisées en ce que** la proportion des monomères Ia)/IIa) dans le copolymère P) est de 23 à 89,4 % en poids et la proportion des monomères Ib)/IIb) dans le copolymère P) est de 10 à 65 % en poids et la proportion des monomères IIc) dans le copolymère P) est de 0,6 à 12 % en poids.

4. Dispersions aqueuses de polyacrylate selon la revendication 1, **caractérisées en ce que** les monomères à fonction acide IIc) sont utilisés en une quantité telle que le copolymère P) présente un indice d'acidité de 5 à 55 mg de KOH/g de solide.

5. Dispersions aqueuses de polyacrylate selon la revendication 1, **caractérisées en ce que** la proportion de la base de greffage hydrophobe à fonction hydroxy I) dans le copolymère P) est de 50 à 95 % en poids, la proportion du copolymère hydrophile à fonction hydroxy II) dans le copolymère greffé P) est de 5 à 50 % en poids.

6. Procédé de fabrication des dispersions aqueuses de polyacrylate selon la revendication 1, **caractérisé en ce que**, lors d'une première étape (i), une base de greffage hydrophobe à fonction hydroxy I) ayant un indice OH de 12 à 250 mg de KOH/g de solide est fabriquée à partir des monomères Ia) et Ib), lors d'une deuxième étape (ii), le polymère hydrophile à fonction hydroxy II) est fabriqué à partir des monomères IIa) à IIc) dans la solution de la base de greffage I) obtenue à l'étape (i), ce polymère hydrophile à fonction hydroxy présentant un indice OH de 20 à 250 mg de KOH/g de solide et un indice d'acidité de 50 à 250 mg de KOH/g de solide, et la copolymérisation initiée par voie radicalaire du mélange de monomères I) et II) a lieu dans des co-solvants C), puis l'agent de neutralisation est ajouté pour former les groupes ioniques nécessaires pour la dispersion après la fabrication de ce copolymère, suivi par l'étape de dispersion par ajout d'eau au copolymère P) ou transfert du copolymère P) dans une préparation aqueuse.

7. Agent de revêtement aqueux, contenant des dispersions de polyacrylate selon la revendication 1.

8. Utilisation des dispersions de polyacrylate selon la revendication 1 pour la fabrication de sous-couches, d'apprêts, de vernis de finition pigmentés ou transparents, ainsi que de vernis en une couche, de vernis automobiles initiaux et de réparation.
